# EUROPEAN PATENT SPECIFICATION

(11) **EP 4 336 079 B1**
(45) Date of publication and mention of the grant of the patent: **05.11.2025**
(21) Application number: 23174674.4
(22) Date of filing: 13.07.2020
(51) Int. Cl.: B29C 65/02, B32B 1/08, B32B 3/06, B32B 7/06, B32B 7/12, B32B 27/08, B32B 27/18, B32B 27/28, B32B 27/30, B32B 27/32, B32B 27/34, B32B 27/36, B32B 27/40, B29C 48/09, B29C 48/21, F16L 9/12, B29L 9/00, B29L 23/00, B29K 23/00, B29K 27/00, B29K 33/20, B29K 61/00, B29C 63/10, B29C 65/08, B29C 65/10, B29C 65/16, B29C 65/20, B29C 65/34, B29C 65/36, B29C 65/40

(54) **MULTILAYERED PIPES, METHOD OF PRODUCING THE SAME AND METHOD OF WELDING TWO MULTILAYERED PIPES**
MEHRSCHICHTIGE ROHRE, VERFAHREN ZUR HERSTELLUNG DAVON UND VERFAHREN ZUM VERSCHWEISSEN ZWEIER MEHRSCHICHTIGER ROHRE
TUYAUX À COUCHES MULTIPLES, LEUR PROCÉDÉ DE FABRICATION ET PROCÉDÉ DE SOUDAGE DE DEUX TUYAUX À COUCHES MULTIPLES

(30) Priority: 12.07.2019 FI 20195635
(43) Date of publication of application: 13.03.2024
(62) Divisional of application: 20185485.8
(73) Proprietor: Uponor Infra Oy, 01510 Vantaa (FI)
(72) Inventor: MERO, Hannes, 01510 Vantaa (FI); ÅNÄS, Tommy, 01510 Vantaa (FI); ULMANEN, Harri, 01510 Vantaa (FI)
(74) Representative: Fenner, Seraina

(56) References cited:
- EP-A1- 0 804 699
- EP-A1- 1 650 019
- FI-B- 119 447
- JP-A- 2005 090 595

## Description

### Field

The present invention relates to multilayered pipes. In particular the invention concerns polymer pipes which have a weldable structural layer, a second, typically functional layer spaced apart from the first layer and a third, intermediate layer fitted between the first and the second layers. The invention also concerns a method for producing multilayered pipes and methods of making pipe joints.

### Background

Pipes of thermoplastic materials (or "plastic pipes") can be used for conducting fluids, such as liquids, gases and vapours. A particular advantage of using plastic materials in these applications is that the pipes can readily be joined by plastic welding into pipelines with leak-proof joints. For forming a pipe joint by welding the materials in the joining areas of two adjacent pipes need only be heated to a thermoplastic state while the ends of the pipes are simultaneously being pressed against each other. After fusing together the pipe ends are cooled.

Plastic welding is operated at temperatures typically for polyethylene in the range of about 150 to 220°C to reach a leak-proof joint. By contrast, welding of metal pipes requires temperatures of several thousand degrees.

Examples of welding techniques include electrofusion welding, hot gas welding, extrusion welding, hot plate welding, high frequency welding, ultrasonic welding, friction welding and laser welding.

Production of a good quality weld depends not only on the particular welding method, but also on the weldability of the pipe materials. Weldability of plastics typically depends on their rheological properties, including viscosity and activation energy, and these properties depend on the actual material selected: different polymer materials have different weldability. At present, polyethylene, and polypropylene are the main welded plastics.

Polymer pipes consisting of only one type of polymer material of the above kind are readily weldable. However, there is an increasing demand for multilayered pipes which comprise a structural layer and intermediate or skin layers of polymers that confer new or improved properties of, e.g., liquid, gas and vapour barrier to the pipes. In the following, these layers will also be referred to as "functional layers". Thus, in order to prevent e.g. diffusion or migration of oxygen or hydrocarbons through the pipe wall, it is a commonly used method to include a barrier layer of a material which prevents such diffusion or migration, for example ethylene vinyl alcohol (EVOH) or polyketone (PK) in the pipe wall structure.

Multilayered pipes of the indicated kind are difficult or in practice even impossible to weld together as such. The materials of the various layers differ rheologically from each other and the functional layers typically have different thermoplastic behavior from that of the structural layer. As a result the functional layer cannot be welded at all, or they can only be welded in temperature ranges different from those of the structural layer.

Furthermore, the functional layers of multilayered pipes are also physically and chemically different from the structural layers. As a result, the compatibility of adjacent layers is poor, and interlayer adhesion has to be improved by the use of adhesive materials in the form of adhesive layers (or binding layers) between the layers. Binding layers can also be arranged on the outer surface of a multilayered pipe structures, as taught in CA 2 323 555, to improve mechanical strength of expandable pipes.

**In** practice, for successfully welding together adjacent multilayered pipes to form a leak-proof joint, functional layers and binding layers have to be completely removed to expose the structural layers before welding. Residues of materials which melt at lower or higher temperatures than the structural layers are detrimental to the mechanical strength properties of the weld. Thus, low-melting materials will flow more easily than the material of the structural layer and the weld between the surfaces is not formed in a symmetric way having equal molten material depths building the weld structure. High-melting materials will remain non-molten during welding and form areas of discontinuity in the welded seam.

There are particular concerns when welding is performed using electrofusion sockets which are applied on the outside surface areas of two pipe ends which are to be joined together. A weld between e.g. the electrofusion socket structural layer and the binder layer, representing a low-melting material, will not ensure the weld strength required as the polymer chain entanglement has not been adequate in the heating phase of the welding process. In such a case it is important to ensure that all less or non-compatible material has been removed since the progress of the welding process cannot easily be monitored underneath the socket.

JP 2005 090595 A discloses an electric fusion joint for connecting the multiple layer tube comprising a barrier layer comprising ethylene-vinyl alcohol copolymer provided on the outer circumference of the tube main body part of polyethylene resin through an adhesive layer.

### Summary of Invention

It is an aim of the present invention to eliminate at least a part of the problems relating to the art and to provide a novel method of joining together the ends of two plastic pipes consisting of multilayered pipe wall structures.

It is another aim of the invention to provide novel multilayered plastic pipes which are capable of being joined together by plastic welding to form a pipeline of at least two lengths of pipes.

It is a further aim of the present invention to provide a method for removing adhesive layers located on polymer pipes which are to be welded together.

A multilayer pipe according to the invention comprises a first weldable structural tubular layer of a first thermoplastic material forming the core of the pipe, the first thermoplastic material being essentially non-polar; at least one second layer arranged on the outer side of the first layer and spaced apart therefrom, said second layer comprising a second thermoplastic material having functional properties; and a third, intermediate layer arranged between the first and the second layer, the intermediate layer having properties of adhesion to both the first and the second layer.

According to the present invention, the third layer has stronger adhesion to second layer than to the first layer, to allow for peeling off of the third layer from the first layer. Multilayered pipes, for example of the afore-mentioned kind, can be produced by conventional technology, e.g. coextrusion.

Multilayered pipes of the above kind can be welded by
- first removing at the pipe ends of the second layer and of the intermediate layer in the joint area by peeling to expose the weldable structural layer; and then
- joining multilayered pipes in butt join relationship and welding the pipes together at the exposed weldable structural layers.

More specifically, the present multilayered pipe is characterized by what is stated in the characterizing part of claim 1.

The method according to the present invention for producing the present pipes is characterized by what is stated in the characterizing part of claim 22 and the method of joining together two or more pipes to form a pipeline is defined in claim 25.

Considerable advantages are obtained with the present invention.

In one embodiment, the intermediate layer is a monolayer. By providing a polymer layer modified with polar groups between the media pipe and the barrier layer, mechanical adhesion between media pipe and the adjacent polymer layer can be achieved, while chemical adhesion to the barrier layer is provided while still allowing for all coating layers to be peeled off manually. Thus, typically, the tear strength of the third layer is greater than the adhesion of the intermediate layer to the first layer.

The polymer layer modified with polar groups allows all layers to be peeled off typically manually and with controlled peeling force. This also allows the application of the same jointing methods that are used in conventional pipe installations, extensive scraping of the pipe can be avoided after skin layers are removed.

In a second embodiment, the intermediate layer is multilayered comprising a separate polymer layer and a separate adhesion layer. With a separate polymer layer between the media pipe and the barrier layer, layer adhesion can be easily adjusted to a determined peeling force level by using different polymer grades, such as polypropylene grades, and/or by modifying the polymer layer recipe by adding releasing components, e.g. wax.

The pipe can be manufactured by conventional co-extrusion techniques. By introducing an intermediate layer of the above kind, peelability properties can be adjusted. Introduction of a separate intermediate layer widens the production process window which increases productivity.

Further advantages and features of embodiments of the present invention will be examined by reference to the attached drawing.

### Brief Description of the Drawing

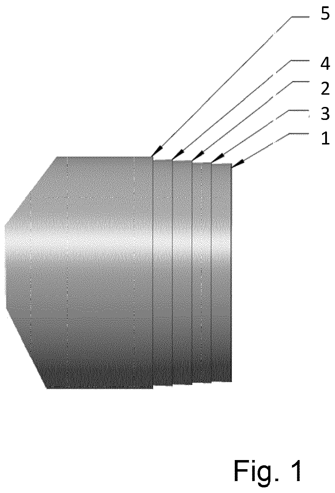

Figure 1 is a schematic depiction of a multi-layered pipe according to an embodiment of the present invention.

### Embodiments

In the present context, "multi-layered pipe" is used synonymously with "multilayer pipe".

The material(s) of the first layer and the second layers can be chosen based on the use of the pipe. Exemplary uses include pressure pipes for potable water, sewer and gas and non-pressure pipes for ventilation, gas, or sewer.

Generally, it is required that the first layer comprises a weldable material. In particular the first layer should comprise a weldable polymer material, such that a reliable, leak-proof joint can be formed between two adjacent polymer pipes by plastic welding.

In one embodiment, the materials of the first layer comprise or consist of or consist essentially of, a polyolefin, such as polyethylene, for example medium-density polyethylene (PE-MD), high-density polyethylene (PE-HD) or a material harder than ordinary PE-HD, such as a higher molecular weight polyolefin (e.g. high molecular weight polyethylene (PE-HMW) or ultra-high molecular weight polyethylene (PE-UHMW) or polypropylene. It can also comprise or consist of or consist essentially of another technical polymer such as polyamide (PA), or a material having elastomeric properties, such as a thermoplastic elastomer (TPE).

Although no exact limit can be given for the high molar mass polyethylenes, generally the suitable materials have molecular weights higher than 500,000 g/mol, for high molecular weight (Mw) up to about 2.5 million g/mol and for PE-UHMW grades from about 2,500,000 g/mol to 10,000,000 g/mol, in particular about 3 to 6 million g/mol.

The TPEs include elastomeric materials that can be moulded or extruded or otherwise melt-processed, such polyurethanes, polyester copolymer, styrene copolymers (such as SBS rubbers) and elastomeric alloys.

The second layer can basically comprise a material of the same kind as the first layer, for example the first and the second layers can both be formed by thermoplastic polymers.

In an embodiment, the second layer comprises a layer which differs from the first in respect of its capability of being welded at the same conditions as the first.

In a preferred embodiment, the second layer is a functional layer, such as a barrier layer. Thus, in such an embodiment, there is a functional layer adjacent and adhered to the first layer.

As discussed above, the functional layer can be a barrier layer, such as a layer providing properties of barrier against diffusion or migration of gases, moisture or liquids through the pipe wall.

Examples of such gases and vaporizable liquids which should be prevented from diffusing or migrating through pipe walls in particular through the walls of polymeric pipes, for example of the kind used for conducting water, such as potable water, include the following: oxygen, carbon monoxide, carbon dioxide, sulphur oxides, nitrogen oxides, nitrogeneous or sulphurous gases and liquids, such as ammonia, amines, sulphides, mercaptanes, alkyl ethers and esters and other nitrogen or sulphur or oxygen containing organic or inorganic compounds. Further organic compounds, the diffusion or migration of which is to be prevented through pipe walls, include substituted and non-substituted, in particular lower, alkanes, alkenes and alkynes and C₅ to C₁₈ cyclic, aliphatic or aromatic hydrocarbons. Halogenated (e.g. chlorinated or fluorinated) non-aromatic and aromatic hydrocarbons are particularly problematic. The same concerns compounds used for dying of textiles and for protecting wood and wood products and textiles against mould, fungi or insects. Hydrocarbons are frequently present in contaminated soil in the form of residues of solvents, fuels and fuel components, colouring agents, and fungicides and insecticides.

As examples of materials useful as diffusion barrier layers against one or several of the above-listed substances, the following materials - which are polar polymers - can be mentioned: ethylene vinyl alcohol (EVOH), polyvinylidene chloride (PVDC), polyamide (PA), polyacrylonitrile (PAN) and polyketone (PK) and combinations thereof. In particular: ethylene vinyl alcohol (EVOH) and polyketone (PK) are suitable as diffusion barrier materials against both gases (oxygen) and hydrocarbons.

According to another embodiment the second layer is a metal layer, such as a metal foil.

The thickness of the first layer will be dependent of pipe diameter. Generally, the thickness is in the range of about 1 to 200 mm, typically 2 to 150 mm, in particular about 2.5 to 100 mm.

The thickness of the second layer can vary. Typically, the thickness of the second layer is about 0.01 to 10 mm, in particular about 0.1 to 5 mm. Generally, although not exclusively, the thickness of the second layer is smaller than the thickness of the first layer.

Although the first and the second layers each are referred to in the single tense ("first layer" and "second layer", respectively) in the above description and below, including in the claims, it should be noted that both of them can be formed by several layers. Thus, the first layer can be a multi-layered pipe as such comprising several polymer layers. Similarly, the second layer can be a multi-layered structure.

The present pipe further includes an intermediate layer. This third layer is fitted between the first layer and the second layer. The third layer is adhered to the first layer and to the second layer so as to interconnect said layers. Importantly, the third layer comprises a polymer material which has an adhesion strength to the second layer which is greater than its adhesion strength to the first layer. Thus, the third layer will adhere more strongly to the second layer than to the first layer.

**In** one embodiment, the force needed for peeling off of the third layer from the second layer is greater than the force needed for peeling off of the third layer from the first layer.

**In** one embodiment, the force needed for peeling off of the third layer from the first layer amounts to about 1 to about 10 N/mm, in particular about 2 to about 8 N/mm.

**In** one embodiment, the force needed for peeling off of the third layer from the second layer amounts to more than 10 N/mm, in particular more than 12 N/mm.

Peeling can be assessed using the T-Peel Test (ASTM D1876), for example at a speed of 100 mm/min.

Depending on the structure of the third layer, it has a thickness of 1 mm or less, typically 0.5 mm or less.

**In** one embodiment, the third layer is a monolayer, typically comprising polar groups. Such a layer can have a thickness of 1 mm or less, typically 0.5 mm or less, for example 0.2 mm or less, in particular about 0.05 to 0.15 mm.

**In** one embodiment, the third layer comprises several layers. The layer adjacent to the media pipe typically formed by a thermoplastic layer can have a thickness of about 0.05 to 1 mm, typically 0.1 to 0.5 mm, for example 0.1 to 0.3 mm.

**In** one embodiment, the first layer is of polyethylene and the third layer is of polypropylene containing polar groups, such as acid or acid anhydride groups.

In one embodiment, a multilayered pipe is provided, comprising a first layer of polyethylene selected from the group of medium-density polyethylene (PE-MD), high-density polyethylene (PE-HD) or a material harder than ordinary PE-HD, such as a higher molecular weight polyolefin (e.g. high molecular weight polyethylene (PE-HMW) or ultra-high molecular weight polyethylene (PE-UHMW), a second layer of a barrier material selected from ethylene vinyl alcohol (EVOH), polyvinylidene chloride (PVDC), polyamide (PA), polyacrylonitrile (PAN) and polyketone (PK) and combinations thereof, in particular ethylene vinyl alcohol, and a third layer, interconnecting the first and the second layers, said third layer being of a material selected from propylene homo- and copolymers, and combinations thereof, for example blends or mixtures thereof, at least a part of said propylene polymer(s) containing polar groups, in particular grafted polar groups, typically selected from acid or acid anhydride groups.

In the above embodiments, each of the first, the second and the third layers can be tubular. Typically, at least the first layer is tubular, preferably each layer is tubular.

In one embodiment, one or several, preferably all, of the first, second and third layers are formed by continuous melt processing, such as coextrusion.

The third layer will next be discussed in more detail in connection with the specific embodiments shown in the attached drawing.

Turning now to the drawings, it can be noted that Figure 1 relates to an embodiment comprising a 5-layered pipe wall structure.

As will appear from the exemplifying embodiment of Figure 1, the innermost part of the pipe is formed by a thermoplastic pipe 1, in particular a stiff-walled pipe. With regard to the pipe and its materials, reference is made to the general description of the "first layer" given above.

In embodiments, typically, the pipe 1 is manufactured from a non-polar material, such as a polyolefinic material, e.g. polyethylene or polypropylene, polyethylene being particularly preferred.

In one embodiment, the thermoplastic pipe is suitable for conducting flowable media, as also discussed above. Preferably, the pipe is suitable for conducting liquids, including water, in particular potable water. In the following, the thermoplastic pipe will also interchangeably be referred to as "media pipe".

A barrier layer 2 is arranged about the media pipe 1. With regard to the barrier layer and its materials, reference is made to the general description of the "second layer" give above.

In one embodiment, the barrier layer comprises an integral layer cylindrically surrounding the pipe 1, partially or entirely. The barrier layer typically comprises a polymeric material exhibiting low gas, oil and grease, and water/water vapour penetration, to provide a barrier against gas, oil and grease, and water/water vapour transmission through layer 4, as generally discussed above.

Reference numeral 3 relates to an intermediate layer fitted between the media pipe 1 and a barrier layer 2 and interconnecting the both (cf. above "third layer").

The intermediate, i.e. third layer, 3, comprises an inner surface abutting the outer surface of the media pipe 1 and an opposite, outer surface abutting the inner surface of the barrier layer 2. The intermediate layer is in the depicted embodiment a monolayer, i.e. the layer is formed by a polymer which contains polar groups distributed in the matrix formed by the polymer.

In one embodiment, in which the third layer is formed by a multi-layered structure, the inner surface can be formed by a mainly non-polar polymer layer to provide good compatibility with the outer surface of non-polar material of the media pipe 1. In such an embodiment, the outer surface of the intermediate layer is formed by a mainly polar layer of for example a polymer containing polar groups, as will be discussed, to provide good compatibility with the outer surface of the polar material of the barrier layer 2.

In one embodiment, the intermediate layer comprises one of several layers of an extrudable thermoplastic material. In one embodiment, the intermediate layer comprises a mainly non-polar thermoplastic material, such as a polyolefinic material, in particular a polyolefinic material different from the polyolefinic material of the media pipe 1. In one embodiment, the intermediate layer 3 comprises polypropylene and the media pipe 1 comprises or consists or consists essentially of an ethylene polymer (homo- or copolymer of ethylene).

To further modify the intermediate layer, it is possible to incorporate non-polar materials, typically exemplified by non-water soluble materials, such as waxes or oils, such as paraffinic waxes or oils. Examples of waxes include polyolefin waxes, such as a polyolefin-bis-stearamide wax, in particular low molecular weight polyolefin-bis-stearamide wax. Such materials will enhance the non-polar character of the material in the intermediate layer and influence the compatibility of the intermediate layer with the non-polar thermoplastic material of the media pipe 1.

**In** one embodiment, the third layer 3 contains up to 15 % by weight, preferably up to 10 % by weight, in particular up to 6 % by weight of a wax, for example a polyolefinic wax, such as a low molecular weight polyolefin wax, such as a polyolefin-bis-stearamide wax. Generally, in wax-containing embodiments, there is at minimum about 1 % of wax in the third layer.

To modify a mainly non-polar intermediate layer to achieve proper compatibility with the inner surface of the barrier layer 3, the intermediate layer also comprises polymeric units with polar groups. Thus, in one embodiment, the intermediate layer or, in case of a multi-layered structure, the layer abutting with the polar layer, comprises a non-polar polymer containing polar groups grafted to the polymer.

The polar groups are in one embodiment selected from esters and acrylic acid groups, maleic acid being particularly preferred. **In** one embodiment, the non-polar polymer containing polar groups, in particular polar groups grafted to the polymer, comprises, consists or essentially consists of polypropylene. The concentration of polar groups is about 1 to 50 mole-%, in particular 10 to 40 mole-%, such as 5 to 30 mole-% of the monomeric units of the, typically grafted, polymer, such as polypropylene.

**In** one embodiment, the third layer comprises polypropylene, in particular polypropylene free from polar groups, having a melt flow rate of 0.1-20, in particular 0.2-10, for example 0.25-7.5, such as 0.25-5, or 0.3 to 4.5 g/10 min at 230 °C and 2.16 kg.

**In** one embodiment, the third layer comprises a polyolefin, such as polypropylene, grafted with polar groups, such as acid or acid anhydride groups, in particular maleic anhydride groups. **In** one embodiment, the grafted polyolefin is polypropylene having a melt flow rate of about 1 to 7 g/10 min at 230 °C and 2.16 kg, for example 2 to 5 g/10 min at 230 °C and 2.16 kg.

**In** one embodiment, the third layer comprises a mixture or blend of a polypropylene free from polar groups, in particular free from grafted polar groups, and a polypropylene containing polar groups, in particular grafted polar groups.

**In** one embodiment, the molar ratio between the non-grafted polyolefin (i.e. polyolefin, such as polypropylene, free from polar groups) to grafted polyolefin (i.e. polyolefin, such as polypropylene, containing grafted polar groups) can vary from about 0.5:99.5 to 99.5:0.5, in particular 20:80 to 80:20, for example 30:70 to 70:30, for example 40:60 to 60:40.

**In** one embodiment, the content of polyolefin, such as polypropylene, in the third layer is greater than 20 %, in particular greater than 50 %, for example 60 to 100 %, or 60 to 90 %, by weight of the third layer.

**In** one embodiment, the third layer may also contain some other polymer than the polyolefin, or the third layer may contain in addition to polypropylene some other polyolefin, such as polyethylene.

**In** one embodiment, the content of grafted polyolefin, in particular grafted polypropylene, such as maleic anhydride grafted polypropylene, in the third layer is 1 to 100 % by weight, in particular 20 to 80 % by weight, for example 40 to 60 % by weight of the third layer.

**In** one embodiment, the third layer has a content of acid or acid anhydride groups, such as maleic anhydride groups, in the range of 1 to 50 %, for example 10 to 40 %, calculated from the number of olefin monomer residues.

The weight ratio of grafted polyolefin, such as grafted polypropylene, to non-grafted polyolefin, such as non-grafted polyolefin, will depend on the content of polar groups in the grafted polyolefin.

In one embodiment, in particular for a high content of polar groups, typically 10 to 50 polar groups, such as maleic anhydride groups, per 100 olefinic residues (monomer residues), the weight ratio of grafted polyolefin, such as grafted polypropylene, to non-grafted polyolefin, such as non-grafted polyolefin, is typically about 5:95 to 80:20, for example 10:90 to 50:50.

One embodiment comprises using polypropylene grafted with maleic anhydride as polar groups ("PP-g-MA"). In one embodiment, such PP-g-MA meets the following parameters:
- Melt Flow Rate (230 °C, 2.16 kg): 1 to 10, in particular 2.5 to 7.5, for example 3 to 6 g/10 min,
- Shore hardness (D) (ASTM 2240 ): 55-75, in particular 58-69,
- Vicat (ASTM 1525) about 120-146 °C, in particular 120 to 122 °C, and
- melting point (ASTM 3418) 147-162 °C.

In one embodiment, in order to incorporate the grafted polyolefin into the non-grafted polyolefin, the layer 3 is extruded from the corresponding polymers during the manufacture of the pipe.

In one embodiment, the third layer comprises a monolayer which is obtained by melt-mixing a first polymer comprising a non-grafted propylene polymer and a second polymer comprising a propylene polymer comprising polar groups, in particular polar groups grafted to the propylene units of the propylene polymer.

In one embodiment, the third layer is provided from a compounded mixture of a first polymer comprising a non-grafted propylene polymer and a second polymer comprising a propylene polymer comprising polar groups, in particular polar groups grafted to the propylene units of the propylene polymer.

In one embodiment, the third layer is provided by coextruding, in particular using a mixing extruder, a layer of first polymer comprising a non-grafted propylene polymer and a second polymer comprising a propylene polymer comprising polar groups, in particular polar groups grafted to the propylene units of the propylene polymer.

Reference numeral 5 stands for a protective skin layer. The protective layer is typically composed of a layer of a thermoplastic material such as a polyolefin or a polyester. Typically, the skin comprises a layer of polyethylene or polypropylene or copolymers of ethylene and propylene, or poly(ethylene terephthalate). Polyethylene and polypropylene are preferred. A particularly preferred polymeric material for the outer protective layer comprises high density polyethylene, for example bimodal, high-density polyethylene which gives stress crack resistance combined with good impact strength. A second preferred polymeric material for the outer protective layer comprises linear LDPE. Linear LDPE gives also good mechanical properties including good scratch resistance. A still third preferred embodiment comprises propylene co-polymer.

To achieve proper adherence to the underlying barrier layer, the skin layer can be coextruded with an adhesive component 4, such as a polyolefin grafted with polar groups, such as ester or acid groups, in particular maleic acid anhydride groups. The molar ratio between the non-grafted polyolefin to grafted polyolefin can vary from about 40:60 to 99.5:0.5, in particular 60:40 to 99:1, for example 75:25 to 95:5. In one embodiment, the concentration of polar groups is about 5 to 50 mole-% of the monomeric units of the, typically grafted, polymer, such as polyolefin, for example polyethylene or polypropylene.

By virtue of the manufacturing process, typically co-extrusion, there will be primarily mechanical adhesion of the intermediate layer 3 to the media pipe 1. The intermediate layer 3 will have weak or no chemical adhesion to the media pipe 1, such as polyethylene pipe, and much stronger chemical adhesion to the polar layer, i.e. the barrier layer 2. As used herein, the term "chemical adhesion" refers to the capability of the polar group, in particular acidic groups, of interacting with the polar barrier polymer by forming at least some chemical bonds therewith.

By providing an intermediate layer 3, for example a polypropylene layer and an adhesive layer, which contains no or only a small amounts of polar groups in the interface between the polyethylene pipe and the polypropylene intermediate layer, and a relatively greater concentration of polar groups in the interface between the intermediate layer and the barrier layer, a structure can be obtained in which layers 2, 3, 4 and 5 can be peeled off to expose the surface of the media pipe 1.

With additional PP layer adhesion between PE pipe and other layers can be easily adjusted to a determined peeling force level by using different PP grades and/or modifying PP layer recipe by adding e.g. wax.

Preferably the peel-off layer (2-5) has a tensile strength greater than the tensile force needed to peel off the layer. Thus, in one embodiment, the tensile strength is greater than 3 N/mm, in particular greater than 5 N/mm, for example greater than 10 N/mm. Typically the tensile strength is about 5 to 25 N/mm, for example 15 to 25 N/mm.

In one embodiment, a multilayered polymer pipe comprises
- a first weldable tubular layer forming the core of the pipe, said first layer comprising essentially non-polar polymer material;
- a second layer surrounding the first layer and spaced apart from it, said second layer comprising polar polymer material; and
- a third layer fitted between the first layer and the second layer, said third layer being adhered to the first layer and to the second layer so as to interconnect said layers,
wherein said third layer comprises a polymer material comprising a first polypropylene having a melt flow rate of 0.1 - 20 g/10 min at 230 °C and 2.16 kg mixed with a second polypropylene grafted with polar groups, said polypropylene having a melt flow rate of about 1 to 7 g/10 min at 230 °C and 2.16 kg. The first and the second polypropylenes can be the same or different.

A method for producing a pipe structure according to an embodiment as disclosed above, typically comprises the steps of
- providing a first thermoplastic tubular layer;
- providing at a distance of the first tubular layer a second layer at least partially surrounding the first layer; and
- providing between the first and the second layers a third layer, which interconnects the first and the second layers and said third layer, said third layer comprises a polymer material having an adhesion strength to the second layer which is greater than its adhesion strength to the first layer.

Typically, the layers are produced by extrusion, including coextrusion, although the layers can also be provided by extruding a first layer and coating that layer with the adhesive layer and the second layer.

Thus, in a first embodiment of the method, two or more layers are produced by coextrusion.

**In** a second embodiment of the method, a multi-layered pipe structure is produced in successive extruders by means of coating with a cross-head or by using winding methods to extrude overlapping layers or by using combined coextrusion and cross-head extrusion.

Embodiments comprising 4-layer pipe walls can be manufactured by co-extrusion of the corresponding polymers using a 4-layer die head by producing the outer skin layer 5 from a modified recipe including also adhesive material to get enough adhesion between skin layer and barrier (EVOH) layer. For the 5-layered pipe wall a 5-layer die head can be used.

According to a further embodiment a method is provided of removing an outer layer of a multilayered pipe according to an embodiment as described above.

The present technology further provides for welding two multilayered pipes comprising removing the barrier layers before welding.

Thus, methods of welding two multilayered pipes - according to any of the preceding embodiments - to each other by plastic welding typically comprises the steps of
- first removing by peeling at the pipe ends of the second layer and of the adhesive layer in the joint area to expose the weldable structural layer; and
- joining multilayered pipes in butt join relationship and welding the pipes together at the exposed weldable structural layers.

The welding can be carried out for example by butt welding or electrofusion socket welding.

### Examples

A number of multilayered, polyethylene (PE100) pipes with an EVOH layer separated from the PE layer by a peel-off layer comprising polypropylene (PP) were manufactured by coextrusion (as discussed above), and their properties were assessed.

Three different PP grades were used, viz. "PP 1" having a melt index of 4.5 g/10 min (230 °C/2.16 kg), "PP 2" having a melt index of 1.3 g/10 min (230 °C/2.16 kg) and "PP 3" having a melt index of 3.5 g/10 min (230 °C/2.16 kg).

Polyethylene wax was added in the form of a master batch with a ratio of wax-to-PP of 20/80 % by weight.

Polar group (Maleic Anhydride (i.e. MAH) groups)) were incorporated into the peel-off layer in the form of a polypropylene polymer grafted with MAH groups. The melting index of the polypropylene was 0.3 g/10 min (230 °C/2.16 kg) and it contained about 20 MAH groups per 100 propylene units.

The peeling force was assessed by pulling the skin of a pipe cut with a specified width and a constant speed (100 mm/min).

The results are summarized in Table 1.

**Table 1**

| **PP-MAH %** | **PP 1 %** | **PP 2 %** | **PP 3 %** | **Wax-MB %** | **Adhesive dosage** | **Peeling Force (N/mm)** |
|---|---|---|---|---|---|---|
| 100 | | | | | +50% | 9.1 |
| 50 | 50 | | | | | 4 |
| 30 | 70 | | | | | 3.7 |
| 20 | 80 | | | | | 3.6 |
| 45 | | 45 | | 10 | | 5.3 |
| 20 | | | 80 | | | 3.7 |
| 10 | | | 90 | | | 2.1 |
| 10 | 90 | | | | | 3 |
| 10 | | | 90 | | | 2.3 |

As can be seen, with a combination of PP-MAH and any of the PP grades tested, an extruded peel-off layer could be produced which could be peeled off, leaving a smooth polyethylene surface.

Mixing of PP-MAH with PP 3 having a melt index of 3.5 g/10 min gave a peel-off layer, for which quite low peeling forces were needed to completely remove the skin off the PE pipe.

Addition of wax in the form of a MB lowered the peeling force.

The specific examples provided in the description given above should not be construed as limiting the scope and/or the applicability of the appended claims.

### Industrial Applicability

The present invention can be applied to a great variety of multilayer polymer pipes, in particular pipes having inner (i.e. core) pipes, which are to be welded together with the corresponding pipes of adjacent multilayer polymer pipes to form an integral pipeline for conducting fluids.

Such pipelines are suitable for a number of applications. One particularly interesting application is transport of drinking water, wherein the functional layer can provide a barrier that prevents diffusion and migration of gases and impurities from contaminated soil into the medium flowing through the pipe. Examples of impurities include hydrocarbons, typically short-chain hydrocarbons, such as methane, and chlorinated hydrocarbons. Thus, the present multilayer polymer pipes can work as drinking water pipes in association with paint shops, gasoline stations, saw mills as well as other industrial installations and facilities. Other fields of application include pipelines in soils which naturally contain methane gases or sulphides.

As will be understood from the preceding description of the present invention and the illustrative examples, the present invention can also be described by reference to the following embodiments:
A multilayered polymer pipe according to the invention comprising
- a first weldable tubular layer (1) forming the core of the pipe, said first layer comprising essentially non-polar polymer material;
- a second layer (2) surrounding the first layer and spaced apart from it, said second layer comprising essentially polar polymer material; and
- a third layer (3) fitted between the first layer and the second layer, said third layer being adhered to the first layer and to the second layer so as to interconnect said layers,
wherein said third layer (3) comprises a polymer material having an adhesion strength to the second layer which is greater than its adhesion strength to the first layer.

Preferably, the third layer (3) is a monolayer.

Preferably, the third layer (3) comprises several layers.

Preferably, wherein the third layer (3) has a thickness of 1 mm or less, in particular 0.5 mm or less, for example 0.2 mm or less, such as about 0.05 to 0.15 mm.

Preferably, the third layer (3) comprises polyolefin, in particular polypropylene.

Preferably, the third layer (3) comprises polyolefin, such as polypropylene, containing reactive groups, in particular reactive groups selected from acid, anhydride, ester, epoxy and cyano group and combinations thereof.

Preferably, the third layer (3) comprises a polyolefinic polymer grafted with acid or acid anhydride groups, such as maleic anhydride groups.

Preferably, the third layer (3) comprises a polypropylene homopolymer or copolymer. Preferably, the third layer comprises polypropylene having a melt flow rate of 0.1 - 20, in particular 0.2-10, for example 0.25-7.5, such as 0.25-5, or 0.3 to 4.5 g/10 min at 230 °C and 2.16 kg.

Preferably, the third layer (3) comprises polypropylene grafted with polar groups, such as acid or acid anhydride groups, in particular maleic anhydride groups, said polypropylene having a melt flow rate of about 1 to 7 g/10 min at 230 °C and 2.16 kg.

Preferably, the third layer (3) has a content of acid or acid anhydride groups, such as maleic anhydride groups, in the range of 1 to 50 %, for example 10 to 40 %, calculated from the number of olefin monomer residues.

Preferably, wherein the content of polyolefin in the third layer (3) is greater than 20 %, in particular greater than 50 %, for example 60 to 100 %, or 60 to 90 %, by weight of the third layer.

Preferably, the third layer (3) contains up to 10 % by weight, in particular up to 6 % by weight of a wax, for example a polyolefinic wax, such as a low molecular weight polyolefin wax, such as a polyolefin-bis-stearamide wax.

Preferably, the third layer (3) comprises two layers, having a first layer with a non-polar surface facing the first layer, and a second layer having a second polar surface facing the second layer.

Preferably, the third layer (3) has a first, non-polar surface facing the first layer, which has a first content of polyolefin, in particular polypropylene, and the third layer has a second, polar surface facing the second layer, which has a second content of polyolefin, said second content of polyolefin, in particular polypropylene, being smaller than said first content of polyolefin.

Preferably, the third layer (3) has a tear strength which is greater than its adhesion strength to the first layer so as to allow for peeling-off of the third layer from the first layer.

Preferably, the first layer (1) is formed by a thermoplastic polymer or polymer blend.

Preferably, the polymer of the first layer (1) is selected from the group of polyolefins, poly(acrylonitrile butadiene styrene), thermoplastic elastomers, polyamides and combinations thereof.

Preferably, the polymer of the first layer (1) is selected from the group of polyolefins and polyamides.

Preferably, the polyolefins are selected from the group of polyethylene and polypropylene, in particular the polyolefins are selected from the group of medium density polyethylene (PE-MD) high-density polyethylene (PE-HD), polyethylene of raised temperature resistance (PE-RT), high molecular weight polyethylene (PE-HMW), ultra-high molecular weight polyethylene (PE-UHMW), cross-linked polyethylene.

Preferably, the second layer (2) is a barrier layer.

Preferably, the second layer (2) is capable of forming a barrier against diffusion of gases, such as oxygen, or impurities present in contaminated ground.

Preferably, the second layer (2) comprises ethylene vinyl alcohol (EVOH), polyvinylidene chloride (PVDC), polyamide (PA) and polyketone (PK) or combinations thereof.

Preferably, the force needed to peel off the third layer (3) from the first layer (1) amounts to about 1 to about 10 N/mm, in particular about 2 to about 8 N/mm, as determined using the T-Peel Test (ASTM D1876), at a speed of 100 mm/min.

Preferably, wherein the third layer comprises polypropylene having a melt flow rate of 0.1-20 g/10 min at 230 °C and 2.16 kg mixed with polypropylene grafted with polar groups, said polypropylene having a melt flow rate of about 1 to 7 g/10 min at 230 °C and 2.16 kg, said third layer preferably having an adhesion strength to the second layer which is greater than its adhesion strength to the first layer, and wherein the polar groups are preferably selected from acid or acid anhydride groups, such as maleic anhydride groups, and combinations thereof.

A method for producing a pipe structure, , the method comprising the steps of
- providing a first weldable tubular layer forming the core of the pipe, said first layer comprising essentially non-polar polymer material;
- providing a second layer surrounding the first layer and spaced apart from it, said second layer comprising an essentially polar polymer material; and
- providing between the first and the second layers a third layer, which interconnects the first and the second layers, said third layer comprising a polymer material having an adhesion strength to the second layer which is greater than its adhesion strength to the first layer.

Preferably, the third layer comprises a monolayer which is obtained by melt-mixing a first polymer comprising a non-grafted propylene polymer and a second polymer comprising a propylene polymer comprising polar groups, in particular polar groups grafted to the propylene units of the propylene polymer.

Preferably, the third layer is provided from a compounded mixture of a first polymer comprising a non-grafted propylene polymer and a second polymer comprising a propylene polymer comprising polar groups, in particular polar groups grafted to the propylene units of the propylene polymer.

Preferably, the third layer is provided by coextruding, in particular using a mixing extruder, a layer of first polymer comprising a non-grafted propylene polymer and a second polymer comprising a propylene polymer comprising polar groups, in particular polar groups grafted to the propylene units of the propylene polymer.

Preferably, the third layer comprises polypropylene having a melt flow rate of 0.1 - 20 g/10 min at 230 °C and 2.16 kg mixed with polypropylene grafted with polar groups, said polypropylene having a melt flow rate of about 1 to 7 g/10 min at 230 °C and 2.16 kg, said third layer preferably having an adhesion strength to the second layer which is greater than its adhesion strength to the first layer.

Preferably, the pipe is produced by coextrusion.

Preferably, the pipe is produced in successive extruders by means of coating with a cross-head or by using winding methods to extrude overlapping layers.

A Method of welding two multilayered pipes, the pipes being according to the invention, to each other by plastic welding, comprising
- first removing at the pipe ends of the second layer and of the third layer in the joint area to expose the weldable structural layer of the multilayered pipes; and
- joining the multilayered pipes in butt join relationship and welding the pipes together at the exposed weldable structural layers, wherein the step of removing at the pipe ends material of the second layer and the third layer comprises peeling-off said layers to reveal the structural layer.

Preferably, the pipes are welded together using butt welding or electrofusion socket welding.

### Patent Literature

CA 2 323 555
FI 99158
FI 119447

## Claims

1. A multilayered polymer pipe comprising
- a first weldable structural layer (1) forming the core of the pipe, said first layer comprising essentially non-polar polymer material;
- a second layer (2) surrounding the first layer and spaced apart from it, said second layer comprising essentially polar polymer material; and
- a third layer (3) fitted between the first layer and the second layer, said third layer being adhered to the first layer and to the second layer so as to interconnect said layers,
**characterized in that** said third layer (3) comprises a polymer material having an adhesion strength to the second layer which is greater than its adhesion strength to the first layer.

2. The pipe according to claim 1, wherein the third layer (3) is a monolayer, or the third layer (3) comprises several layers, the third layer (3) preferably having a thickness of less than 1 mm, in particular less than 0.5 mm, for example 0.2 mm or less, such as about 0.05 to 0.15 mm.

3. The pipe according to claim 1 or 2, wherein the third layer (3) comprises polyolefin, such as polypropylene, or a mixture thereof, which preferably contains reactive groups, in particular reactive groups selected from acid, anhydride, ester, epoxy and cyano group and combinations thereof, advantageously the third layer (3) comprises a polyolefinic polymer grafted with acid or acid anhydride groups, such as maleic anhydride groups.

4. The pipe according to any of the preceding claims, wherein the third layer (3) comprises a polypropylene homopolymer or copolymer.

5. The pipe according to any of the preceding claims, wherein the third layer comprises polypropylene having a melt flow rate of 0.1-20, in particular 0.2-10, for example 0.25-7.5, such as 0.25-5, or 0.3 to 4.5 g/10 min at 230 °C and 2.16 kg.

6. The pipe according to any of the preceding claims, wherein the third layer (3) comprises polypropylene grafted with polar groups, such as acid or acid anhydride groups, in particular maleic anhydride groups, said polypropylene having a melt flow rate of about 1 to 7 g/10 min at 230 °C and 2.16 kg.

7. The pipe according to any of the preceding claims, wherein the third layer (3) has a content of acid or acid anhydride groups, such as maleic anhydride groups, in the range of 1 to 50 %, for example 10 to 40 %, calculated from the number of olefin monomer residues.

8. The pipe according to any of the preceding claims, wherein the content of polyolefin, such as polypropylene, in the third layer (3) is greater than 20 %, in particular greater than 50 %, for example 60 to 100 %, or 60 to 90 %, by weight of the third layer.

9. The pipe according to any of the preceding claims, wherein the third layer (3) comprises two layers, having a first layer with a non-polar surface facing the first layer, and a second layer having a second polar surface facing the second layer.

10. The pipe according to any of the preceding claims, wherein the third layer (3) has a first, non-polar surface facing the first layer, which has a first content of polyolefin, in particular polypropylene, and the third layer has a second, polar surface facing the second layer, which has a second content of polyolefin, said second content of polyolefin, in particular polypropylene, being smaller than said first content of polyolefin.

11. The pipe according to any of the preceding claims, wherein the third layer (3) has a tear strength which is greater than its adhesion strength to the first layer so as to allow for peeling-off of the third layer from the first layer.

12. The pipe according to any of the preceding claims, wherein the first layer (1) is formed by a thermoplastic polymer or polymer blend, in particular the polymer of the first layer (1) is selected from the group of polyolefins, poly(acrylonitrile butadiene styrene), thermoplastic elastomers, polyamides and combinations thereof, preferably the polymer of the first layer (1) is selected from the group of polyolefins and polyamides, in particular the polymer of the first layer (1) is polyethylene.

13. The pipe according to any of the preceding claims, wherein the second layer (2) is a barrier layer, in particular the second layer (2) is capable of forming a barrier against diffusion of gases, such as oxygen, or impurities present in contaminated ground, said second layer (2) preferably comprising ethylene vinyl alcohol (EVOH), polyvinylidene chloride (PVDC), polyamide (PA) and polyketone (PK) or combinations thereof.

14. The pipe according to any of the preceding claims, wherein the force needed to peel off the third layer (3) from the first layer (1) amounts to about 1 to about 10 N/mm, in particular about 2 to about 8 N/mm.

15. The pipe according to any of the preceding claims, wherein the third layer comprises polypropylene having a melt flow rate of 0.1-20 g/10 min at 230 °C and 2.16 kg mixed with polypropylene grafted with polar groups, said polypropylene have a melt flow rate of about 1 to 7 g/10 min at 230 °C and 2.16 kg, said polypropylene preferably having an adhesion strength to the second layer which is greater than its adhesion strength to the first layer, and wherein the polar groups are preferably selected from acid or acid anhydride groups, such as maleic anhydride groups.

16. The pipe according to any of the preceding claims, wherein the first weldable structural layer (1) is a thermoplastic pipe suitable for conducting flowable media.

17. The pipe according to any of the preceding claims, wherein the second layer (2) is a functional layer, such as a barrier layer, such as a layer providing properties of barrier against diffusion or migration of gases, moisture or liquids through the pipe wall.

18. The pipe according to any of the preceding claims, further comprising an outer protective layer, such as a protective skin layer (5).

19. The pipe according to any of the preceding claims, wherein the outer protective layer comprises a layer of polyethylene or polypropylene or copolymers of ethylene and propylene, or poly(ethylene terephthalate).

20. The pipe according to any of the preceding claims, wherein the outer protective layer comprises high density polyethylene, for example bimodal, high-density polyethylene, or linear LDPE, or a propylene co-polymer.

21. The pipe according to any of the preceding claims, wherein at least the first weldable structural layer (1) is tubular, preferably each layer is tubular.

22. A method for producing a pipe structure, in particular a pipe structure according to any of claims 1 to 21, the method comprising the steps of
- providing a first weldable structural layer forming the core of the pipe, said first layer comprising essentially non-polar polymer material;
- providing a second layer surrounding the first layer and spaced apart from it, said second layer comprising an essentially polar polymer material; and
- providing between the first and the second layers a third layer, wherein the third layer interconnects the first and the second layers, the method being **characterized in that** said third layer comprises a polymer material having an adhesion strength to the second layer which is greater than its adhesion strength to the first layer.

23. The method according to claim 22, wherein
- the third layer comprises a monolayer which is obtained by melt-mixing a first polymer comprising a non-grafted propylene polymer and a second polymer comprising a propylene polymer comprising polar groups, in particular polar groups grafted to the propylene units of the propylene polymer; or
- the third layer is provided by coextruding, in particular using a mixing extruder, a layer of first polymer comprising a non-grafted propylene polymer and a second polymer comprising a propylene polymer comprising polar groups, in particular polar groups grafted to the propylene units of the propylene polymer.

24. The method according to claim 22 or 23, wherein the third layer comprises polypropylene having a melt flow rate of 0.1 - 20 g/10 min at 230 °C and 2.16 kg mixed with polypropylene grafted with polar groups, said polypropylene have a melt flow rate of about 1 to 7 g/10 min at 230 °C and 2.16 kg, said polypropylene preferably having an adhesion strength to the second layer which is greater than its adhesion strength to the first layer, and wherein the polar groups are preferably selected from acid or acid anhydride groups, such as maleic anhydride groups.

25. A method of welding two multilayered pipes according to any of claims 1 to 21 to each other by plastic welding, comprising
- first removing at the pipe ends material of the second layer and of the third layer in the joint area to expose the weldable structural layer of the multilayered pipes; and
- joining the multilayered pipes in butt join relationship and welding the pipes together at the exposed weldable structural layers,
wherein the step of removing at the pipe ends material of the second layer and the third layer comprises peeling-off said layers to reveal the structural layer.

26. The method according to claim 25, wherein said peeling-off comprises manually peeling-off.

27. The method according to claim 25 or claim 26, wherein the pipes are welded together using butt welding or electrofusion socket welding.

## Patentansprüche

1. Mehrschichtiges Polymerrohr, umfassend:
- eine erste schweißbare Strukturschicht (1), die den Kern des Rohrs bildet, wobei die erste Schicht im Wesentlichen unpolares Polymermaterial umfasst;
- eine zweite Schicht (2), die die erste Schicht umgibt und von ihr beabstandet ist, wobei die zweite Schicht im Wesentlichen polares Polymermaterial umfasst; und
- eine dritte Schicht (3), die zwischen der ersten Schicht und der zweiten Schicht angebracht ist, wobei die dritte Schicht auf die erste Schicht und auf die zweite Schicht geklebt ist, um die Schichten miteinander zu verbinden,
**dadurch gekennzeichnet, dass** die dritte Schicht (3) ein Polymermaterial umfasst, das eine Klebefestigkeit an der zweiten Schicht aufweist, die größer als seine Klebefestigkeit an der ersten Schicht ist.

2. Rohr nach Anspruch 1, wobei die dritte Schicht (3) eine Monoschicht ist oder die dritte Schicht (3) mehrere Schichten umfasst, wobei die dritte Schicht (3) vorzugsweise eine Dicke von weniger als 1 mm aufweist, insbesondere weniger als 0,5 mm, zum Beispiel 0,2 mm oder weniger, wie etwa 0,05 bis 0,15 mm.

3. Rohr nach Anspruch 1 oder 2, wobei die dritte Schicht (3) Polyolefin, wie Polypropylen, oder ein Gemisch davon umfasst, das vorzugsweise reaktive Gruppen enthält, insbesondere reaktive Gruppen, die aus Säure-, Anhydrid-, Ester-, Epoxy- und Cyano-Gruppen und Kombinationen davon ausgewählt sind, wobei die dritte Schicht (3) vorteilhafterweise ein polyolefinisches Polymer umfasst, das mit Säure- oder Säureanhydrid-Gruppen, wie Maleinsäureanhydrid-Gruppen, gepfropft ist.

4. Rohr nach einem der vorstehenden Ansprüche, wobei die dritte Schicht (3) ein Polypropylen-Homopolymer oder -Copolymer umfasst.

5. Rohr nach einem der vorstehenden Ansprüche, wobei die dritte Schicht Polypropylen mit einer Schmelzflussrate von 0,1-20, insbesondere 0,2-10, zum Beispiel 0,25-7,5, wie 0,25-5, oder 0,3 bis 4,5 g/10 min bei 230 °C und 2,16 kg umfasst.

6. Rohr nach einem der vorstehenden Ansprüche, wobei die dritte Schicht (3) Polypropylen umfasst, das mit polaren Gruppen, wie Säure- oder Säureanhydrid-Gruppen gepfropft ist, insbesondere Maleinsäureanhydrid-Gruppen, wobei das Polypropylen eine Schmelzflussrate von etwa 1 bis 7 g/10 min bei 230 °C und 2,16 kg aufweist.

7. Rohr nach einem der vorstehenden Ansprüche, wobei die dritte Schicht (3) einen Gehalt an Säure- oder Säureanhydrid-Gruppen, wie Maleinsäureanhydrid-Gruppen, im Bereich von 1 bis 50 %, zum Beispiel 10 bis 40 %, aufweist, berechnet anhand der Anzahl an Olefinmonomerresten.

8. Rohr nach einem der vorstehenden Ansprüche, wobei der Gehalt an Polyolefin, wie Polypropylen, in der dritten Schicht (3) größer als 20 Gew.-% ist, insbesondere größer als 50 Gew.-%, zum Beispiel 60 bis 100 Gew.-%, oder 60 bis 90 Gew.-%, bezogen auf das Gewicht der dritten Schicht.

9. Rohr nach einem der vorstehenden Ansprüche, wobei die dritte Schicht (3) zwei Schichten umfasst, die eine erste Schicht mit einer unpolaren Oberfläche, die der ersten Schicht zugewandt ist, und eine zweite Schicht mit einer zweiten polaren Oberfläche, die der zweiten Schicht zugewandt ist, aufweisen.

10. Rohr nach einem der vorstehenden Ansprüche, wobei die dritte Schicht (3) eine erste, unpolare Oberfläche aufweist, die der ersten Schicht zugewandt ist und einen ersten Gehalt an Polyolefin, insbesondere Polypropylen, aufweist, und die dritte Schicht eine zweite, polare Oberfläche aufweist, die der zweiten Schicht zugewandt ist und einen zweiten Gehalt an Polyolefin aufweist, wobei der zweite Gehalt an Polyolefin, insbesondere Polypropylen, geringer ist als der erste Gehalt an Polyolefin.

11. Rohr nach einem der vorstehenden Ansprüche, wobei die dritte Schicht (3) eine Reißfähigkeit aufweist, die größer ist als ihre Klebefestigkeit an der ersten Schicht, um ein Abziehen der dritten Schicht von der ersten Schicht zu erlauben.

12. Rohr nach einem der vorstehenden Ansprüche, wobei die erste Schicht (1) durch ein thermoplastisches Polymer oder eine thermoplastische Polymermischung ausgebildet ist, wobei das Polymer der ersten Schicht (1) insbesondere aus der Gruppe von Polyolefinen, Poly(acrylonitrilbutadienstyrol), thermoplastischen Elastomeren, Polyamiden und Kombinationen davon ausgewählt ist, wobei das Polymer der ersten Schicht (1) vorzugsweise aus der Gruppe von Polyolefinen und Polyamiden ausgewählt ist, wobei das Polymer der ersten Schicht (1) insbesondere Polyethylen ist.

13. Rohr nach einem der vorstehenden Ansprüche, wobei die zweite Schicht (2) eine Barriereschicht ist, wobei die zweite Schicht (2) insbesondere in der Lage ist, eine Barriere gegen die Diffusion von Gasen wie Sauerstoff oder Verunreinigungen, die in kontaminiertem Boden vorliegen, zu bilden, wobei die zweite Schicht (2) vorzugsweise Ethylenvinylalkohol (EVOH), Polyvinylidenchlorid (PVDC), Polyamid (PA) und Polyketon (PK) oder Kombinationen davon umfasst.

14. Rohr nach einem der vorstehenden Ansprüche, wobei die Kraft, die zum Abziehen der dritten Schicht (3) von der ersten Schicht (1) benötigt wird, bei etwa 1 bis etwa 10 N/mm, insbesondere etwa 2 bis etwa 8 N/mm, liegt.

15. Rohr nach einem der vorstehenden Ansprüche, wobei die dritte Schicht Polypropylen mit einer Schmelzflussrate von 0,1-20 g/10 min bei 230 °C und 2,16 kg umfasst, gemischt mit Polypropylen, das mit polaren Gruppen gepfropft ist, wobei das Polypropylen eine Schmelzflussrate von etwa 1 bis 7 g/10 min bei 230 °C und 2,16 kg aufweist, wobei das Polypropylen vorzugsweise eine Klebefestigkeit an der zweiten Schicht aufweist, die größer als seine Klebefestigkeit an der ersten Schicht ist, und wobei die polaren Gruppen vorzugsweise aus Säure- oder Säureanhydrid-Gruppen, wie Maleinsäureanhydrid-Gruppen, ausgewählt sind.

16. Rohr nach einem der vorstehenden Ansprüche, wobei die erste schweißbare Strukturschicht (1) ein thermoplastisches Rohr ist, das zum Leiten fließfähiger Medien geeignet ist.

17. Rohr nach einem der vorstehenden Ansprüche, wobei die zweite Schicht (2) eine Funktionsschicht ist, wie eine Barriereschicht, wie eine Schicht, die Barriereeigenschaften gegen die Diffusion oder Wanderung von Gasen, Feuchtigkeit oder Flüssigkeiten durch die Rohrwand bereitstellt.

18. Rohr nach einem der vorstehenden Ansprüche, ferner umfassend eine äußere schützende Schicht, wie eine schützende Hautschicht (5).

19. Rohr nach einem der vorstehenden Ansprüche, wobei die äußere schützende Schicht eine Schicht aus Polyethylen oder Polypropylen oder Copolymeren von Ethylen und Propylen oder Poly(ethylenterephthalat) umfasst.

20. Rohr nach einem der vorstehenden Ansprüche, wobei die äußere schützende Schicht Polyethylen von hoher Dichte, zum Beispiel bimodales Polyethylen von hoher Dichte oder lineares LDPE, oder ein Propylen-Copolymer umfasst.

21. Rohr nach einem der vorstehenden Ansprüche, wobei zumindest die erste schweißbare Strukturschicht (1) röhrenförmig ist, wobei vorzugsweise jede Schicht röhrenförmig ist.

22. Verfahren zum Herstellen einer Rohrstruktur, insbesondere einer Rohrstruktur nach einem der Ansprüche 1 bis 21, wobei das Verfahren die folgenden Schritte umfasst:
- Bereitstellen einer ersten schweißbaren Strukturschicht, die den Kern des Rohrs bildet, wobei die erste Schicht im Wesentlichen unpolares Polymermaterial umfasst;
- Bereitstellen einer zweiten Schicht, die die erste Schicht umgibt und von ihr beabstandet ist, wobei die zweite Schicht ein im Wesentlichen polares Polymermaterial umfasst; und
- Bereitstellen einer dritten Schicht zwischen der ersten und der zweiten Schicht, wobei die dritte Schicht die erste und die zweite Schicht miteinander verbindet, wobei das Verfahren **dadurch gekennzeichnet ist, dass** die dritte Schicht ein Polymermaterial mit einer Klebefestigkeit an der zweiten Schicht umfasst, die größer ist als seine Klebefestigkeit an der ersten Schicht.

23. Verfahren nach Anspruch 22, wobei
- die dritte Schicht eine Monoschicht umfasst, die durch Schmelzemischen eines ersten Polymer, das ein ungepfropftes Propylenpolymer umfasst, und eines zweiten Polymers erhalten wird, das ein Propylenpolymer umfasst, das polare Gruppen, insbesondere polare Gruppen, die auf die Propylen-Einheiten des Propylenpolymers gepfropft sind, umfasst; oder
- die dritte Schicht durch Koextrusion, insbesondere unter Verwendung eines Mischextruders, einer Schicht aus erstem Polymer, das ein ungepfropftes Propylenpolymer umfasst, und einem zweiten Polymer bereitgestellt wird, das ein Propylenpolymer umfasst, das polare Gruppen umfasst, insbesondere polare Gruppen, die auf die Propylen-Einheiten des Propylenpolymers gepfropft sind.

24. Verfahren nach Anspruch 22 oder 23,, wobei die dritte Schicht Polypropylen mit einer Schmelzflussrate von 0,1-20 g/10 min bei 230 °C und 2,16 kg, gemischt mit Polypropylen, das mit polaren Gruppen gepfropft ist, umfasst, wobei das Polypropylen eine Schmelzflussrate von etwa 1 bis 7 g/10 min bei 230 °C und 2,16 kg aufweist, wobei das Polypropylen vorzugsweise eine Klebefestigkeit an der zweiten Schicht aufweist, die größer als seine Klebefestigkeit an der ersten Schicht ist, und wobei die polaren Gruppen vorzugsweise aus Säure- oder Säureanhydrid-Gruppen, wie Maleinsäureanhydrid-Gruppen, ausgewählt sind.

25. Verfahren zum Verschweißen zweier mehrschichtiger Rohre nach einem der Ansprüche 1 bis 21 miteinander durch Kunststoffschweißen, umfassend:
- zuerst Entfernen von Material der zweiten Schicht und der dritten Schicht an den Rohrenden in dem Verbindungsbereich durch Abziehen, um die schweißbare Strukturschicht der mehrschichtigen Rohre freizulegen; und
- Verbinden der mehrschichtigen Rohre in Stumpfverbindungsbeziehung und Verschweißen der Rohre miteinander an den freigelegten schweißbaren Strukturschichten, wobei der Schritt des Entfernens von Material der zweiten Schicht und der dritten Schicht an den Rohrenden das Abziehen der Schichten, um die Strukturschicht freizulegen, umfasst.

26. Verfahren nach Anspruch 25, wobei das Abziehen manuelles Abziehen umfasst.

27. Verfahren nach Anspruch 25 oder Anspruch 26, wobei die Rohre unter Verwendung von Stumpfschweißen oder Elektroschweißmuffenschweißen miteinander verschweißt sind.

## Revendications

1. Tuyau de polymère multicouche comprenant
- une première couche structurale soudable (1) formant l'âme du tuyau, ladite première couche comprenant un matériau de polymère essentiellement non polaire ;
- une deuxième couche (2) entourant la première couche et espacée de celle-ci, ladite deuxième couche comprenant un matériau de polymère essentiellement polaire ; et
- une troisième couche (3) intercalée entre la première couche et la deuxième couche, ladite troisième couche étant collée à la première couche et à la deuxième couche de manière à relier lesdites couches,
**caractérisé en ce que** ladite troisième couche (3) comprend un matériau de polymère ayant une force d'adhérence à la deuxième couche qui est supérieure à sa force d'adhérence à la première couche.

2. Tuyau selon la revendication 1, dans lequel la troisième couche (3) est une monocouche, ou la troisième couche (3) comprend plusieurs couches, la troisième couche (3) ayant de préférence une épaisseur inférieure à 1 mm, en particulier inférieure à 0,5 mm, par exemple 0,2 mm ou moins, telle qu'environ 0,05 à 0,15 mm.

3. Tuyau selon la revendication 1 ou 2, dans lequel la troisième couche (3) comprend une polyoléfine, telle qu'un polypropylène, ou un mélange de celles-ci, qui contient de préférence des groupes réactifs, en particulier des groupes réactifs choisis parmi un groupe acide, anhydride, ester, époxy et cyano et des combinaisons de ceux-ci, avantageusement la troisième couche (3) comprend un polymère polyoléfinique greffé avec des groupes acide ou anhydride d'acide, tels que des groupes anhydride maléique.

4. Tuyau selon l'une quelconque des revendications précédentes, dans lequel la troisième couche (3) comprend un homopolymère ou copolymère de polypropylène.

5. Tuyau selon l'une quelconque des revendications précédentes, dans lequel la troisième couche comprend un polypropylène ayant un indice de fluidité à chaud de 0,1 à 20, en particulier de 0,2 à 10, par exemple de 0,25 à 7,5, comme de 0,25 à 5, ou de 0,3 à 4,5 g/10 min à 230 °C et 2,16 kg.

6. Tuyau selon l'une quelconque des revendications précédentes, dans lequel la troisième couche (3) comprend un polypropylène greffé avec des groupes polaires, tels que des groupes acide ou anhydride d'acide, en particulier des groupes anhydride maléique, ledit polypropylène ayant un indice de fluidité à chaud d'environ 1 à 7 g/10 min à 230 °C et 2,16 kg.

7. Tuyau selon l'une quelconque des revendications précédentes, dans lequel la troisième couche (3) a une teneur en groupes acide ou anhydride d'acide, tels que des groupes anhydride maléique, dans la plage de 1 à 50 %, par exemple 10 à 40 %, calculée à partir du nombre de résidus de monomères d'oléfine.

8. Tuyau selon l'une quelconque des revendications précédentes, dans lequel la teneur en polyoléfine, telle qu'un polypropylène, dans la troisième couche (3) est supérieure à 20 %, en particulier supérieure à 50 %, par exemple 60 à 100 %, ou 60 à 90 %, en poids de la troisième couche.

9. Tuyau selon l'une quelconque des revendications précédentes, dans lequel la troisième couche (3) comprend deux couches, ayant une première couche comportant une surface non polaire faisant face à la première couche, et une deuxième couche ayant une deuxième surface polaire faisant face à la deuxième couche.

10. Tuyau selon l'une quelconque des revendications précédentes, dans lequel la troisième couche (3) a une première surface non polaire faisant face à la première couche, qui a une première teneur en polyoléfine, en particulier en polypropylène, et la troisième couche a une deuxième surface polaire faisant face à la deuxième couche, qui a une deuxième teneur en polyoléfine, ladite deuxième teneur en polyoléfine, en particulier en polypropylène, étant inférieure à ladite première teneur en polyoléfine.

11. Tuyau selon l'une quelconque des revendications précédentes, dans lequel la troisième couche (3) a une résistance à la déchirure qui est supérieure à sa force d'adhérence à la première couche de manière à permettre le pelage de la troisième couche depuis la première couche.

12. Tuyau selon l'une quelconque des revendications précédentes, dans lequel la première couche (1) est formée par un polymère ou mélange de polymères thermoplastique(s), en particulier le polymère de la première couche (1) est choisi dans le groupe des polyoléfines, d'un poly(acrylonitrile butadiène styrène), des élastomères thermoplastiques, des polyamides et des combinaisons de ceux-ci, de préférence le polymère de la première couche (1) est choisi dans le groupe des polyoléfines et des polyamides, en particulier le polymère de la première couche (1) est un polyéthylène.

13. Tuyau selon l'une quelconque des revendications précédentes, dans lequel la deuxième couche (2) est une couche barrière, en particulier la deuxième couche (2) est capable de former une barrière contre la diffusion de gaz, tels que l'oxygène, ou d'impuretés présentes dans un sol contaminé, ladite deuxième couche (2) comprenant de préférence de l'éthylène alcool vinylique (EVOH), du poly(chlorure de vinylidène) (PVDC), du polyamide (PA) et de la polycétone (PK) ou des combinaisons de ceux-ci.

14. Tuyau selon l'une quelconque des revendications précédentes, dans lequel la force nécessaire pour peler la troisième couche (3) depuis la première couche (1) est d'environ 1 à environ 10 N/mm, en particulier d'environ 2 à environ 8 N/mm.

15. Tuyau selon l'une quelconque des revendications précédentes, dans lequel la troisième couche comprend un polypropylène ayant un indice de fluidité à chaud de 0,1 à 20 g/10 min à 230 °C et 2,16 kg mélangé avec un polypropylène greffé avec des groupes polaires, ledit polypropylène ayant un indice de fluidité à chaud d'environ 1 à 7 g/10 min à 230 °C et 2,16 kg, ledit polypropylène ayant de préférence une force d'adhérence à la deuxième couche supérieure à sa force d'adhérence à la première couche, et dans lequel les groupes polaires sont de préférence choisis parmi les groupes acide ou anhydride d'acide, tels que des groupes anhydride maléique.

16. Tuyau selon l'une quelconque des revendications précédentes, dans lequel la première couche structurale soudable (1) est un tuyau thermoplastique approprié pour conduire des milieux pouvant s'écouler.

17. Tuyau selon l'une quelconque des revendications précédentes, dans lequel la deuxième couche (2) est une couche fonctionnelle, telle qu'une couche barrière, telle qu'une couche fournissant des propriétés de barrière contre la diffusion ou la migration de gaz, d'humidité ou de liquides à travers la paroi du tuyau.

18. Tuyau selon l'une quelconque des revendications précédentes, comprenant en outre une couche protectrice externe, telle qu'une couche de peau protectrice (5).

19. Tuyau selon l'une quelconque des revendications précédentes, dans lequel la couche protectrice externe comprend une couche de polyéthylène ou de polypropylène ou de copolymères d'éthylène et de propylène, ou de poly(téréphtalate d'éthylène).

20. Tuyau selon l'une quelconque des revendications précédentes, dans lequel la couche protectrice externe comprend un polyéthylène haute densité, par exemple un polyéthylène bimodal, haute densité, ou un PE linéaire, ou un copolymère de propylène.

21. Tuyau selon l'une quelconque des revendications précédentes, dans lequel au moins la première couche structurale soudable (1) est tubulaire, de préférence chaque couche est tubulaire.

22. Procédé de production d'une structure de tuyau, en particulier d'une structure de tuyau selon l'une quelconque des revendications 1 à 21, le procédé comprenant les étapes de
- fourniture d'une première couche structurale soudable formant l'âme du tuyau, ladite première couche comprenant un matériau de polymère essentiellement non polaire ;
- fourniture d'une deuxième couche entourant la première couche et espacée de celle-ci, ladite deuxième couche comprenant un matériau de polymère essentiellement polaire ; et
- fourniture entre les première et deuxième couches d'une troisième couche, dans laquelle la troisième couche relie les première et deuxième couches, le procédé étant **caractérisé en ce que** ladite troisième couche comprend un matériau de polymère ayant une force d'adhérence à la deuxième couche qui est supérieure à sa force d'adhérence à la première couche.

23. Procédé selon la revendication 22, dans lequel
- la troisième couche comprend une monocouche qui est obtenue par mélange à l'état fondu d'un premier polymère comprenant un polymère de propylène non greffé et d'un deuxième polymère comprenant un polymère de propylène comprenant des groupes polaires, en particulier des groupes polaires greffés sur les motifs de propylène du polymère de propylène ; ou
- la troisième couche est fournie par coextrusion, notamment à l'aide d'une extrudeuse mélangeuse, d'une couche de premier polymère comprenant un polymère de propylène non greffé et d'un deuxième polymère comprenant un polymère de propylène comprenant des groupes polaires, en particulier des groupes polaires greffés sur les motifs de propylène du polymère de propylène.

24. Procédé selon la revendication 22 ou 23, dans lequel la troisième couche comprend un polypropylène ayant un indice de fluidité à chaud de 0,1 à 20 g/10 min à 230 °C et 2,16 kg mélangé avec un polypropylène greffé comportant des groupes polaires, ledit polypropylène ayant un indice de fluidité à chaud d'environ 1 à 7 g/10 min à 230 °C et 2,16 kg, ledit polypropylène ayant de préférence une force d'adhérence à la deuxième couche supérieure à sa force d'adhérence à la première couche, et dans lequel les groupes polaires sont de préférence choisis parmi des groupes acide ou anhydride d'acide, tels que des groupes anhydride maléique.

25. Procédé de soudage de deux tuyaux multicouches selon l'une quelconque des revendications 1 à 21 l'un à l'autre par soudage plastique, comprenant
- d'abord l'élimination, au niveau du matériau des extrémités du tuyau, de la deuxième couche et de la troisième couche dans la zone de jointure pour exposer la couche structurale soudable des tuyaux multicouches ; et
- la jointure des tuyaux multicouches en une relation de joint bout à bout et soudage des tuyaux ensemble au niveau des couches structurales soudables exposées,
dans lequel l'étape d'élimination, au niveau du matériau des extrémités du tuyau, de la deuxième couche et de la troisième couche comprend le pelage desdites couches pour révéler la couche structurale.

26. Procédé selon la revendication 25, dans lequel ledit pelage comprend un pelage de manière manuelle.

27. Procédé selon la revendication 25 ou la revendication 26, dans lequel les tuyaux sont soudés ensemble en utilisant un soudage bout à bout ou un soudage par douille par électrofusion.
